# EUROPEAN PATENT APPLICATION

(11) **EP 4 198 457 A1**
(43) Date of publication of application: **21.06.2023**
(21) Application number: 22213220.1
(22) Date of filing: 13.12.2022
(51) Int. Cl.: G01C 21/36, B60R 1/22, G08G 1/16

(54) **VEHICLE SURROUNDINGS IMAGE DISPLAYING DEVICE AND VEHICLE SURROUNDINGS IMAGE DISPLAYING METHOD**

(30) Priority: 15.12.2021 JP 2021203416
(71) Applicant: Faurecia Clarion Electronics Co., Ltd., Saitama-shi, Saitama 330-0081 (JP)
(72) Inventor: SHIOGUCHI, Takuma, SAITAMA, 330-0081 (JP); AOYAMA, Noriaki, SAITAMA, 330-0081 (JP)
(74) Representative: Lavoix

(57) **Abstract**

[Problem] To enable a driver to identify easily the state of the surroundings of a vehicle.

[Means for Resolution]

A vehicle surroundings image displaying device 100 comprises: a location detecting portion 131 for detecting a location of a vehicle 1; a format selecting portion 132 for selecting one display format DFA from a plurality of display formats DF as a display format DF for a map image PG of the surrounding of the location of the vehicle 1; a map image displaying portion 133 for displaying, on the display 61, the map image PG in the one display format DFA; an image acquiring portion 134 for acquiring an image of the surroundings of the vehicle 1; an evaluating portion 135 for evaluating whether or not a distance LD from the vehicle 1 to a fee station FS is no greater than a first distance L1; and a surroundings image displaying portion 137 for displaying, on the display 61, an image of the surroundings of the vehicle 1, with an orientation that is in accordance with the map image PG of the one display format DFA, upon evaluation, by the evaluating portion 135, that the distance LD is no greater than the first distance L1.

## Description

### [Field of Technology]

The present invention relates to a vehicle surroundings image displaying device and vehicle surroundings image displaying method.

### [Prior Art]

Conventionally there have been known technologies for displaying an image of the surroundings of a vehicle. For example, Patent Document 1 describes an in-vehicle display device comprising: a storing portion wherein facility information regarding a prescribed facility for which an overhead image is to be displayed and a display condition for the overhead image in the prescribed facility are stored in advance; display condition evaluating means for evaluating whether or not the display condition for the overhead image in the prescribed facility is satisfied; image converting means for generating an overhead image through image conversion from the captured image upon evaluation, in the display condition evaluation, that the display condition is satisfied; and display controlling means for displaying, on a displaying portion, the overhead image that has been generated by the image converting means.

### [Prior Art Document]

### [Patent Document]

[Patent Document 1] Japanese Unexamined Patent Application Publication 2017-28389

### [Summary of the Invention]

### [Problem Solved by the Present Invention]

However, with the technology described in Patent Document 1, there are cases wherein the orientation of the overhead image that is displayed will not be suitable. When the orientation of the overhead image is not suitable, it may be difficult for the driver to identify the state of the surroundings of the vehicle displayed in the overhead image. The object of the present invention is to provide a vehicle surroundings image displaying device and vehicle surroundings image displaying method that enable the driver to identify easily the state of the surroundings of the vehicle.

### [Means for Solving the Problem]

In order to achieve the object set forth above, a vehicle surroundings image displaying device according to the present embodiment, for example, comprises: a location detecting portion for detecting a vehicle location; a format selecting portion for selecting one display format from a plurality of display formats as the display format for a map image of the surrounding of the location of the vehicle; a map image displaying portion for displaying the map image on a display with the one display format; an image acquiring portion for acquiring an image of the surroundings of the vehicle; an evaluating portion for evaluating whether or not a distance from the vehicle to a prescribed facility is no greater than a first distance; and a surroundings image displaying portion for displaying, on the display, an image of the surroundings of the vehicle, with an orientation that is in accordance with the map image of the one display format, upon evaluation, by the evaluating portion, that the distance is no greater than the first distance.

### [Effects of the Invention]

In the vehicle surroundings image displaying device and vehicle surroundings image displaying method according to the present invention, the image of the surroundings of the vehicle is displayed with an orientation that is in accordance with the map image, enabling the driver to identify easily the state of the surroundings of the vehicle.

### [Brief Descriptions of the Drawings]

FIG. 1 is a diagram depicting an example of a structure for an in-vehicle device that includes a vehicle surroundings image displaying device.
FIG. 2 is a diagram depicting an example of a method for generating a three-dimensional image through a surroundings image displaying portion.
FIG. 3 is a screenshot depicting an example of a map display screen that displays a map image of a first display format.
FIG. 4 is a screenshot depicting an example of a surroundings display screen for displaying a three-dimensional image in accordance with the map image of the first display format.
FIG. 5 is a screenshot depicting an example of a surroundings display screen that displays an overhead image with an orientation that is in accordance with the map image of the first display format.
FIG. 6 is a screenshot depicting an example of a map display screen that displays a map image of a second display format.
FIG. 7 is a screenshot depicting an example of a surroundings display screen that displays a three-dimensional image with an orientation that is in accordance with the map image of the second display format.
FIG. 8 is a screenshot depicting an example of a surroundings display screen that displays an overhead image with an orientation that is in accordance with the map image of a second display format.
FIG. 9 is a flowchart depicting an example of a process in a vehicle surroundings image displaying device.

### [Forms for Carrying Out the Present Invention]

Embodiments according to the present invention will be explained below in reference to the drawings.

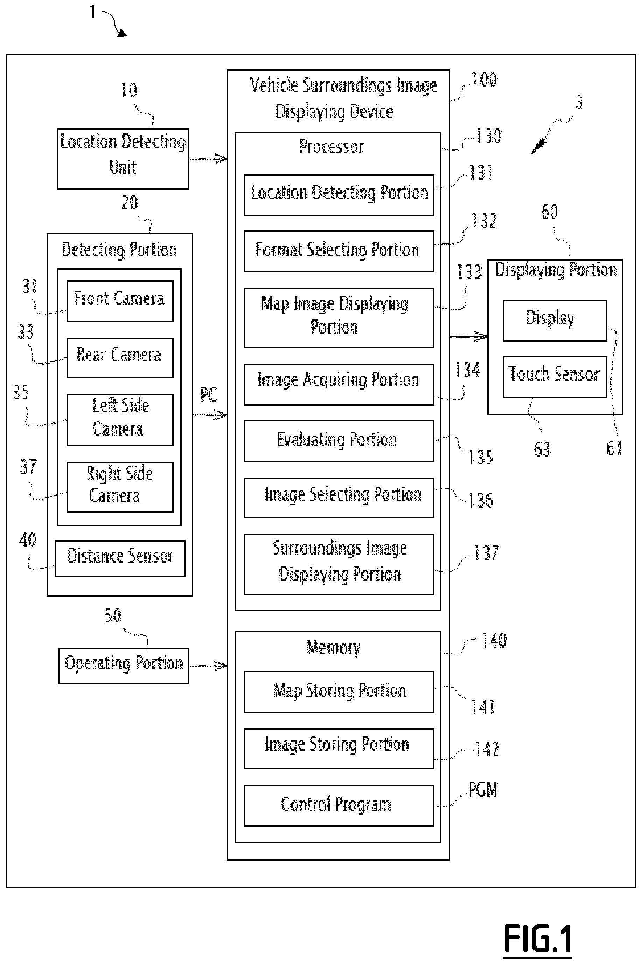

FIG. 1 is a diagram depicting an example of a structure of an in-vehicle device 3 that includes a vehicle surroundings image displaying device 100. The in-vehicle device 3 is installed in a vehicle 1. The in-vehicle device 3 comprises a location detecting unit 10, a detecting portion 20, an operating portion 50, a displaying portion 60, and a vehicle surroundings image displaying device 100.

The location detecting unit 10 detects the location of the vehicle 1. The location detecting unit 10 comprises a GNSS receiver for receiving a GNSS (Global Navigation Satellite System) signal, and a processor for calculating the location of the vehicle 1 based on the GNSS signal that is received by the GNSS receiver. Drawings of the GNSS receiver and of the processor are omitted. The location detecting unit 10 outputs location information, indicating the location of the vehicle 1, to the vehicle surroundings image displaying device 100.

The detecting portion 20 captures an image of the surroundings of the vehicle 1, and also detects a distance LD from the vehicle 1 to a fee station FS. The fee station FS corresponds to an example of a "prescribed facility." The detecting portion 20 comprises an imaging portion 30 and a distance sensor 40.

While the explanation in the present embodiment will be for a case wherein the "prescribed facility" is a fee station FS, there is no limitation thereto. The prescribed facility may be any facility wherein there is the possibility that the vehicle 1 may make contact when the vehicle 1 is passing therethrough. The prescribed facility may be another drive-through facility instead, such as, for example, a fast-food restaurant. Additionally, obstacles such as vehicles that are parked on the shoulder of the road traveled by the vehicle 1 may be included as a "prescribed facility."

The imaging portion 30 captures an image of the surroundings of the vehicle 1. The imaging portion 30 comprises a front camera 31 for imaging to the front of the vehicle 1, a rear camera 33 for imaging to the rear of the vehicle 1, a left side camera 35 for imaging to the left side of the vehicle 1, and a right side camera 37 for imaging to the right side of the vehicle 1. Each of these cameras comprises an image sensor such as a CCD (Charge-Coupled Device) or a CMOS (Complementary Metal-Oxide-Semiconductor) and a data processing circuit for generating a captured image PC from the image sensor.

In the imaging portion 30, the viewing angle of each of the cameras, which are directed in the four directions, is adjusted so as to enable imaging in a range of 360°, centered on the vehicle 1, through the cameras that are pointed in the four directions (that is, the forward direction, the rearward direction, the direction toward the left side, and the direction toward the right side). The front camera 31, the rear camera 33, the left side camera 35, and the right-side camera 37 each capture images of the respective imaging range at a prescribed frame rate, to generate the captured image PC. The imaging portion 30 outputs the generated captured image PC to the vehicle surroundings image displaying device 100. The vehicle surroundings image displaying device 100 stores the inputted captured image PC in a memory 140. Note that the front camera 31, the rear camera 33, the left side camera 35, and the right-side camera 37 may each be structured from a single camera, or may be structured from a plurality of cameras.

The distance sensor 40 detects the distance LD from the vehicle 1 to the fee station FS. For the distance sensor 40, LiDAR (Light Detection and Ranging) sensors, for example, are equipped in a plurality of locations, to the front, the rear, the left side, and the right side, or the like, on the vehicle body that structures the vehicle 1, to acquire point group data using electromagnetic signals. Each individual point datum that structures the point group data indicates a distance LD from the vehicle 1 to an object (such as, for example, a fee station FS) that is present within a range that is up to a prescribed distance.

While in the present embodiment the explanation was for a case wherein the distance sensor 40 is LiDAR sensors, there is no limitation thereto. The distance sensor 40 may instead be, for example, radar or sonar sensors. Moreover, while, in the present embodiment, the explanation is for a case wherein LiDAR sensors are arranged at a plurality of locations, such as the front, the rear, the left side, the right side, or the like, on the vehicle body that structures the vehicle 1, there is no limitation thereto. A LiDAR sensor may instead be arranged on the roof of the vehicle 1 to acquire point group data for the entire periphery (that is, forward, rearward, to the left side, and to the right side).

While in the present embodiment the explanation is for a case wherein the distance sensor 40 detects a distance LD from the vehicle 1 to a fee station FS, there is no limitation thereto. The vehicle surroundings image displaying device 100 may instead detect a distance LD using the captured image PC captured by the imaging portion 30.

The operating portion 50 receives operations from a user who is riding in the vehicle 1. The user may be, for example, the driver. The operating portion 50 outputs an operation signal, corresponding to the operation that is received, to the vehicle surroundings image displaying device 100. The operations received by the operating portion 50 include, for example, an operation for starting an image displaying process, an operation for ending the image displaying process, and the like. The operating portion 50 comprises, for example, a schematic image display ON switch and a schematic image display OFF switch, and when the image display ON switch is pressed, the vehicle surroundings image displaying device 100 receives an operation for instructing that the image displaying process is to be started. If, during execution of the image displaying process, the image display OFF switch is pressed, the vehicle surroundings image displaying device 100 receives an operation to terminate the image displaying process.

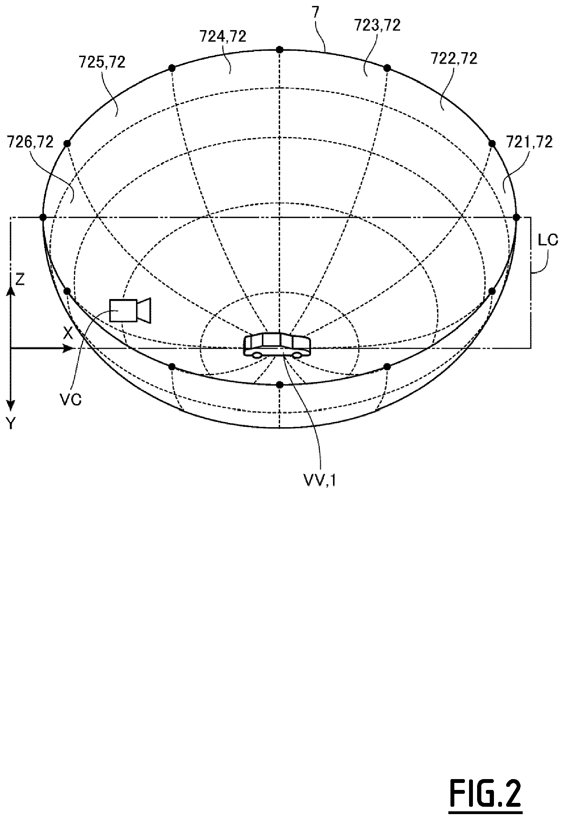

Note that the "image displaying process" is a process wherein the vehicle surroundings image displaying device 100 displays, on a display 61, a map image PG, a three-dimensional image PP, or an overhead image PQ. FIG. 1 will be referenced to explain the functional structure of the vehicle surroundings image displaying device 100 for the "image displaying process," which will be explained further in reference to FIG. 2 through FIG. 8. Note that the map image PG, the three-dimensional image PP, and the overhead image PQ will be explained in reference to FIG. 2 through FIG. 8.

The displaying portion 60 comprises a display 61 and a touch sensor 63. A liquid crystal display, an organic EL display, or the like, is used for the display 61. The displaying portion 60 displays the map image PG, the three-dimensional image PP, or the overhead image PQ on the display 61 based on display data inputted from the vehicle surroundings image displaying device 100. The touch sensor 63 uses a sensor such as of a resistance film type, an electrostatic capacitance type, or the like. The touch sensor 63 is disposed on the display surface of the display 61. The displaying portion 60 detects, through the touch sensor 63, an operation wherein the finger of the user touches the display 61, and generates a location signal that indicates the location of the detected touch operation. That is, the display 61 and the touch sensor 63 structure a so-called "touch panel."

The vehicle surroundings image displaying device 100 is a computer comprising a processor 130 such as a CPU (Central Processing Unit), an MPU (Micro-Processing Unit), or the like, and a memory 140 such as a ROM (Read-Only Memory), a RAM (Random Access Memory), or the like. The vehicle surroundings image displaying device 100 comprises, in addition to these devices, an interface circuit for connecting to a storage device such as an HDD (Hard Disk Drive), an SSD (Solid State Drive), or the like, and to sensors, peripheral devices, and the like, an in-vehicle network communication circuit for communicating with other in-vehicle devices through an in-vehicle network, and so forth. The vehicle surroundings image displaying device 100 achieves various types of functional structures through the processor 130 executing a control program PGM that is stored in the memory 140.

The vehicle surroundings image displaying device 100 includes a location detecting portion 131, a format selecting portion 132, a map image displaying portion 133, an image acquiring portion 134, an evaluating portion 135, an image selecting portion 136, a surroundings image displaying portion 137, a map storing portion 141, and an image storing portion 142, for example, as functional portions. Specifically, the processor 130 executes the control program PGM that is stored in the memory 140 so that the processor 130 functions as the location detecting portion 131, the format selecting portion 132, the map image displaying portion 133, the image acquiring portion 134, the evaluating portion 135, the image selecting portion 136, and the surroundings image displaying portion 137. Moreover, the processor 130 executes the control program PGM that is stored in the memory 140 to cause the memory 140 to function as the map storing portion 141 and the image storing portion 142.

The map storing portion 141 stores map images PG. The map images PG are read out by the map image displaying portion 133.

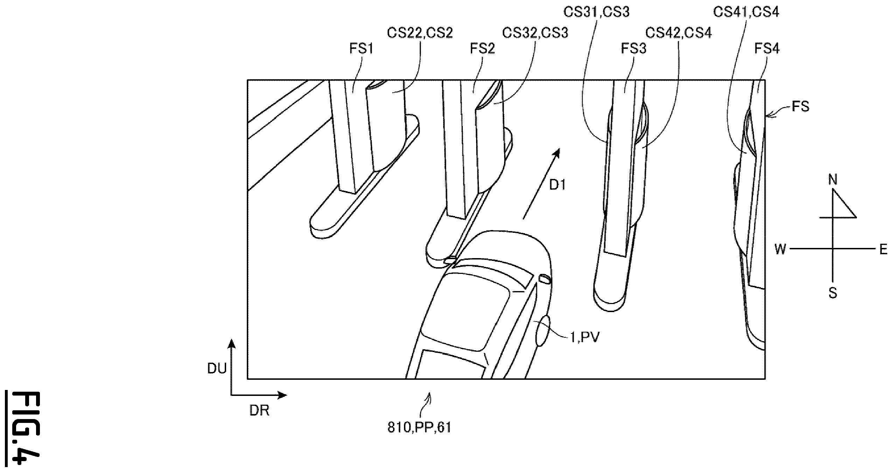

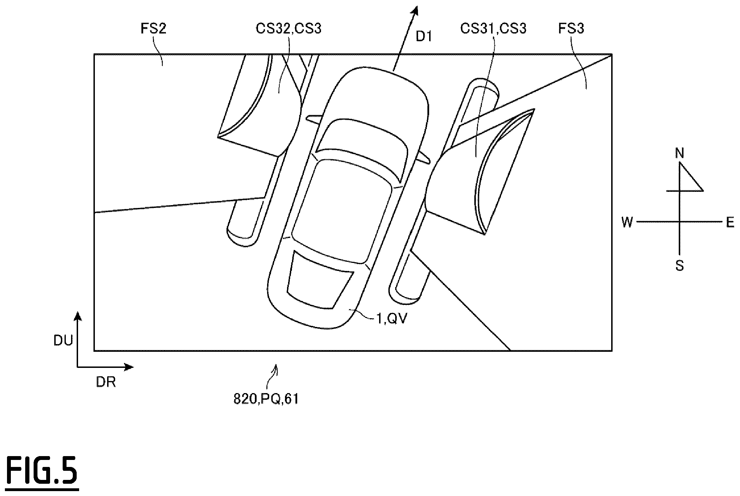

The image storing portion 142 stores the captured images PC. The captured images PC are generated by the imaging portion 30. Additionally, the image storing portion 142 stores three-dimensional data and a vehicle image QV of the vehicle 1. When generating a three-dimensional image PP, the three-dimensional data of the vehicle 1 are read out by the surroundings image displaying portion 137, and a vehicle image PV is generated from the three-dimensional data for the vehicle 1. When an overhead image PQ is generated, the vehicle image QV is read out from the surroundings image displaying portion 137. The vehicle image PV will be explained further in reference to FIG. 4. The vehicle image QV will be explained further in reference to FIG. 5.

The location detecting portion 131 detects the location of the vehicle 1. For example, the location detecting portion 131 detects the location of the vehicle 1 through acquiring, from the location detecting unit 10, location information that indicates the location of the vehicle 1.

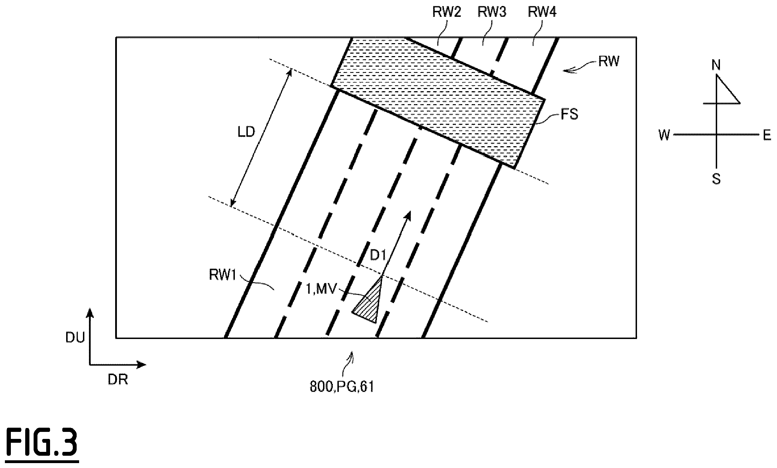

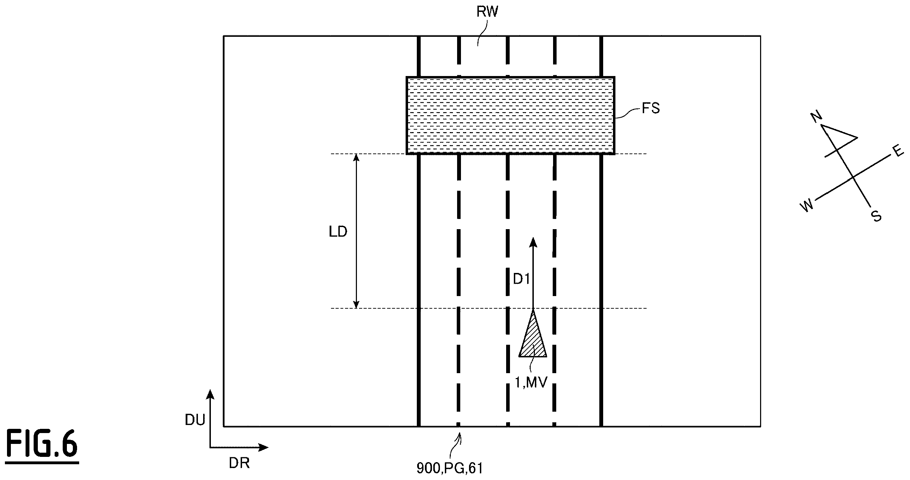

The format selecting portion 132 selects one display format DFA, from among a plurality of display formats DF, as the display format DF for the map image PG of the surrounding of the location of the vehicle 1. The format selecting portion 132 receives an operation by the user on the operating portion 50, to select one display format DFA, from among the plurality of display formats DF, in accordance with the received operation. The plurality of display formats DF includes a first display format DF1 and a second display format DF2. The first display format DF1 is a display format DF that displays the map image PG on the display 61 so that the upward direction DU of the display 61 will be the direction of North in the map image PG. The second display format DF2 is a display format DF that displays the map image PG on the display 61 so that the upward direction DU of the display 61 will be the direction of travel D1 of the vehicle 1 in the map image PG. The upward direction DU and the first display format DF1 will be explained further in reference to FIG. 3. The second display format DF2 will be explained further in reference to FIG. 6.

The map image displaying portion 133 displays a map image PG on the display 61 in a single display format DFA selected by a format selecting portion 132. For example, the map image displaying portion 133 acquires, from the location detecting unit 10, location information that indicates the location of the vehicle 1, and reads out, from the map storing portion 141, a map image PG that corresponds to the location information that has been acquired, to thereby acquire a map image PG of the surrounding of the vehicle 1. Additionally, the map image displaying portion 133 displays, on the display 61, the map image PG that has been acquired from the map storing portion 141, doing so in, for example, the first display format DF1 or the second display format DF2.

Although in the present embodiment the explanation is for a case wherein the map image displaying portion 133 acquires the map image PG of the surrounding of the vehicle 1 through reading out, from the map storing portion 141, a map image PG that corresponds to the location information, there is no limitation thereto. Instead, the vehicle surroundings image displaying device 100 may connect, so as to enable communication, to a server device, and the map image displaying portion 133 may receive, from the server device, a map image PG that corresponds to the location information, to thereby acquire the map image PG of the surrounding of the vehicle 1. In this case, the map storing portion 141 need not store the map image PG, enabling a simpler structure for the vehicle surroundings image displaying device 100.

The image acquiring portion 134 acquires an image of the surroundings of the vehicle 1. The image acquiring portion 134 acquires an image of the surroundings of the vehicle 1 through acquiring captured images PC captured by the front camera 31, the rear camera 33, the left side camera 35, and the right-side camera 37 of the imaging portion 30.

The evaluating portion 135 evaluates whether or not the distance LD from the vehicle 1 to the fee station FS is no greater than a first distance L1. The first distance L1 is, for example, 5 meters. The distance LD is detected by, for example, a detecting portion 20. Moreover, the evaluating portion 135 evaluates whether the speed of travel of the vehicle 1 is no greater than a threshold value. The evaluating portion 135 acquires the speed of travel of the vehicle 1 from the travel control ECU in the schematic diagram. The travel control ECU controls the travel of the vehicle 1. The threshold value is, for example, 10 km/h. Note that the travel speed of the vehicle 1 may also be termed "vehicle speed" in the explanation below.

The surroundings image displaying portion 137 displays an image of the surroundings of the vehicle 1 on the display 61 as an overhead image PQ with an orientation that is in accordance with the map image PG of the one display format DFA selected through the format selecting portion 132. Additionally, the surroundings image displaying portion 137 displays an image of the surroundings of the vehicle 1 on the display 61 as a three-dimensional image PP that has a virtual viewpoint set outside of the vehicle 1, with an orientation that is in accordance with the map image PG of one display format DFA selected through the format selecting portion 132. The virtual viewpoint corresponds to a virtual camera VC. The surroundings image displaying portion 137 generates the overhead image PQ and the three-dimensional image PP through compositing together the captured images PC captured by the front camera 31, the rear camera 33, the left side camera 35, and the right-side camera 37 of the imaging portion 30. The virtual camera VC and the three-dimensional image PP will be explained further in reference to FIG. 2. If the evaluating portion 135 evaluates that the travel speed of the vehicle 1 is no greater than the threshold value, for example, the surroundings image displaying portion 137 displays, on the display 61, an image selected by the image selecting portion 136.

The image selecting portion 136 selects either an overhead image PQ or a three-dimensional image PP depending on an operation by the user on the operating portion 50, for example. Moreover, the image selecting portion 136 may instead select the overhead image PQ or the three-dimensional image PP depending on a positional relationship between the vehicle 1 and the fee station FS. The image selecting portion 136 may select the overhead image PQ when, for example, the distance LD is no greater than a first distance L1 and greater than a second distance L2. Additionally, the image selecting portion 136 may select the three-dimensional image PP if, for example, the distance LD is greater than the second distance L2. In this format, the image of the surroundings of the vehicle 1 will be displayed on the display 61 as a three-dimensional image PP wherein a virtual viewpoint has been set outside the vehicle 1 if the distance LD is greater than the second distance L2. Additionally, the image of the surroundings of the vehicle 1 is displayed on the display 61 as an overhead image PQ if the distance LD is no greater than the second distance L2. The result is the ability to switch the image of the surroundings of the vehicle 1 appropriately between displaying as a three-dimensional image PP and displaying as an overhead image PQ by setting the second distance L2 appropriately.

A method for generating the three-dimensional image PP will be explained next in reference to FIG. 2. FIG. 2 is a diagram depicting an example of a method for generating a three-dimensional image PP by the surroundings image displaying portion 137. As illustrated in FIG. 2, the surroundings image displaying portion 137 arranges a hemispherical projection surface 7 in virtual space. An X axis, a Y axis, and a Z axis are set, mutually perpendicularly, on this projection surface 7. Additionally, a virtual vehicle VV is disposed on the bottom surface of the projection surface 7. The virtual vehicle VV is the vehicle 1 in virtual space. The virtual vehicle VV corresponds to three-dimensional data of the vehicle 1, stored in the image storing portion 142. The Z axis is parallel to the vertical direction in virtual space. The X axis and Y axis are parallel to horizontal directions in the virtual space. The X axis is parallel to the major axial direction (the lengthwise direction) of the vehicle body of the virtual vehicle VV. The Y axis is parallel to the minor axial direction (the short direction) of the vehicle body of the virtual vehicle VV. The Z axis positive direction is the upward direction in virtual space. The X axis positive direction is the direction to the front of the vehicle body of the virtual vehicle VV, which is the direction to the right in virtual space. The Y axis positive direction is the direction to the right of the vehicle body of the virtual vehicle VV, which is the downward direction in virtual space.

The location of the virtual camera VC is set depending on, for example, the positional relationship between the vehicle 1 and the fee station FS. The projection surface 7 is structured by a plurality of split projection surfaces 72. The split projection surfaces 72 include a first split projection surface 721, a second split projection surface 722, a third split projection surface 723, a fourth split projection surface 724, a fifth split projection surface 725, and a sixth split projection surface 726. The first split projection surface 721 through sixth split projection surface 726 are arranged to the left of the virtual vehicle VV with respect to a center plane LC of the projection surface 7. The center plane LC includes the major axis of the virtual vehicle VV, and is a plane that is parallel to the X-Z plane.

The first split projection surface 721 through sixth split projection surface 726 are arranged at intervals of 30°, with respect to the center plane LC. For example, the first split projection surface 721 corresponds to the range of between 0° and 30° with respect to the center plane LC. The second split projection surface 722 corresponds to a range from 30° to 60° with respect to the center plane LC. The third split projection surface 723 corresponds to a range from 60° to 90° with respect to the center plane LC. The fourth split projection surface 724 corresponds to a range from 90° to 120° with respect to the center plane LC. The fifth split projection surface 725 corresponds to a range from 120° to 150° with respect to the center plane LC. The sixth split projection surface 726 corresponds to a range from 150° to 180° with respect to the center plane LC.

Of the images PC captured by the front camera 31, for example, the images on the half on the left side are located on the first split projection surface 721 and second split projection surface 722. The images PC captured by the left side camera 35, for example, are located on the third split projection surface 723 and the fourth split projection surface 724. Of the images PC captured by the rear camera 33, for example, the images on the half on the left side are located on the fifth split projection surface 725 and sixth split projection surface 726. The captured images PC are arranged in this way on the first split projection surface 721 through sixth split projection surface 726. Note that when locating the captured images PC on the split projection surfaces 72, the captured images PC are deformed so as to match the shapes of the split projection surfaces 72. Similarly, the half of the image on the right side of the image PC captured by the front camera 31, the image PC captured by the right side camera 37, and the half of the image on the right side of the image PC captured by the rear camera 33 are located on the six split projection surfaces 72 that are located in the direction to the right of the virtual vehicle VV, with respect to the center plane LC, of the projection surface 7.

In this way, the surroundings image displaying portion 137 generates the three-dimensional image PP through generating an image that would be captured by a virtual camera VC in a state wherein the captured images PC of the front camera 31, the rear camera 33, the left side camera 35, and the right-side camera 37 are arranged on the projection surface 7.

The map image PG of the first display format DF1, the three-dimensional image PP that is displayed with an orientation that is in accordance with the map image PG of the first display format DF1, and the overhead image PQ that is displayed with an orientation that is in accordance with the map image PG of the first display format DF1 will be explained next in reference to FIG. 3 through FIG. 5. Directions are described in each of FIG. 3 through FIG. 5. In each of FIG. 3 through FIG. 5 the direction of North is the upward direction DU on the display 61 and the direction of East is the direction DR to the right of the display 61.

The map image PG of the first display format DF1 will be explained first in reference to FIG. 3. FIG. 3 is a screenshot showing an example of a map display screen 800 that displays a map image PG of the first display format DF1. The map display screen 800 is displayed by the map image displaying portion 133 on the display 61. The first display format DF1 is a display format DF that displays the map image PG on the display 61 so that the upward direction DU of the display 61 will be the direction of North in the map image PG. An expressway RW, a fee station FS, and a vehicle mark MV are displayed on the map display screen 800. In the map display screen 800, the expressway RW shows an image of an expressway, and the fee station FS shows an image of a fee station. In the map display screen 800, the fee station FS is displayed by a rectangular mark.

The expressway RW is a one-way road from the southwest to the northeast. The expressway RW is structured with four lanes: a first lane RW1, a second lane RW2, a third lane RW3, and a fourth lane RW4. The first lane RW1, the second lane RW2, the third lane RW3, and the fourth lane RW4 are laid out, in that sequence, from the northwest to the southeast.

A vehicle mark MV indicates the location of the vehicle 1. The vehicle mark MV is displayed as, for example, an isosceles triangle, where the corner with the acute angle indicates the front end of the vehicle 1. The direction of travel D1 indicates the direction in which the vehicle 1 is traveling. The direction of travel D1 is in the northeast direction. That is, the vehicle 1 is traveling facing toward the northeast direction. The vehicle mark MV is displayed in the third lane RW3. That is, the vehicle 1 is traveling in the third lane RW3.

The fee station FS extends in the width direction of the expressway RW (from the northwest to the southeast). The fee station FS is arranged in the direction of travel of the vehicle 1. The distance LD is the distance from the vehicle 1 to the fee station FS.

The three-dimensional image PP that is displayed with an orientation that is in accordance with the map image PG in the first display format DF1 will be explained next in reference to FIG. 4. FIG. 4 is a screenshot depicting an example of a surroundings display screen 810 that displays a three-dimensional image PP with an orientation that is in accordance with the map image PG of the first display format DF1. The surroundings display screen 810 is displayed by the surroundings image displaying portion 137 on the display 61. The vehicle image PV and the fee station FS are displayed on the surroundings display screen 810. Note that the vehicle image PV is generated, by the surroundings image displaying portion 137, from three-dimensional data for the vehicle 1 that is stored in the image storing portion 142. The three-dimensional image PP depicted in FIG. 4 is displayed with an orientation that is in accordance with the map image PG in the first display format DF1. For example, the direction of travel D1 of the vehicle 1 in the three-dimensional image PP matches the direction of travel D1 of the vehicle 1 in the map image PG. The direction of travel D1 is the northeast direction. Additionally, the three-dimensional image PP depicted in FIG. 4 is an image that would be captured by a virtual camera VC if the virtual camera VC, depicted in FIG. 2, were located above and to the rear of the right side of the virtual vehicle VV.

A first fee facility FS1, a second fee facility FS2, a third fee facility FS3, and a fourth fee facility FS4 are arranged in the fee station FS. The first fee facility FS1 is located between the first lane RW1 and the second lane RW2. The second fee facility FS2 is located between the second lane RW2 and the third lane RW3. The third fee facility FS3 is located between the third lane RW3 and the fourth lane RW4. The fourth fee facility FS4 is located on the southeast side of the fourth lane RW4. The first fee facility FS1, the second fee facility FS2, the third fee facility FS3, and the fourth fee facility FS4 are laid out, in that order, from the northwest to the southeast.

The vehicle that is traveling in the third lane RW3 inserts the payment into the third cash slot CS3. The third cash slot CS3 is structured from a third cash slot CS31 and a third cash slot CS32. The third cash slot CS32 is located on the third lane RW3 side of the second fee facility FS2. In addition, the third cash slot CS31 is located on the third lane RW3 side of the third fee facility FS3. If the vehicle traveling in the third lane RW3, for example, is a left-hand-steering vehicle, the payment from the vehicle traveling in the third lane RW3 would be inserted into the third cash slot CS31. If the vehicle traveling in the third lane RW3, for example, is a right-hand-steering vehicle, the payment from the vehicle traveling in the third lane RW3 would be inserted into the third cash slot CS32.

A second cash slot CS22 is provided on the second lane RW2 side of the first fee facility FS1. A fourth cash slot CS42 is located on the fourth lane RW4 side of the third fee facility FS3. A fourth cash slot CS41 is located on the fourth lane RW4 side of the fourth fee facility FS4.

As illustrated in FIG. 4, because the third cash slot CS31 and the third cash slot CS32 are arranged protruding toward the third lane RW3, when a vehicle 1 is traveling in the third lane RW3, the driver can appreciate the need for caution so as to not collide with the third cash slot CS31 or the third cash slot CS32.

Additionally, as illustrated in FIG. 4, because the three-dimensional image PP is displayed with an orientation that is in accordance with the map image PG of the first display format DF1, the direction of travel D1 of the vehicle 1 in the map image PG will match the direction of travel D1 of the vehicle 1 in the three-dimensional image PP. The result is that the driver will be able to identify easily the state of the surroundings of the vehicle 1 through viewing the three-dimensional image PP.

The overhead image PQ that is displayed with an orientation that is in accordance with the map image PG of the first display format DF1 will be explained next in reference to FIG. 5. FIG. 5 is a screenshot depicting an example of a surroundings display screen 820 that displays an overhead image PQ with an orientation that is in accordance with the map image PG of the first display format DF1. The surroundings display screen 820 is displayed by the surroundings image displaying portion 137 on the display 61. The vehicle image QV, the second fee facility FS2, and the third fee facility FS3 are displayed in the surroundings display screen 820. The overhead image PQ depicted in FIG. 5 is displayed with an orientation that is in accordance with the map image PG of the first display format DF1. For example, the direction of travel D1 of the vehicle 1 in the overhead image PQ matches the direction of travel D1 of the vehicle 1 in the map image PG.

As illustrated in FIG. 5, the third cash slot CS32 is located on the third lane RW3 side of the second fee facility FS2. In addition, the third cash slot CS31 is located on the third lane RW3 side of the third fee facility FS3.

As illustrated in FIG. 5, because the third cash slot CS31 and the third cash slot CS32 are arranged protruding toward the third lane RW3, when a vehicle 1 is traveling in the third lane RW3, the driver can appreciate the need for caution so as to not collide with the third cash slot CS31 or the third cash slot CS32.

Additionally, as illustrated in FIG. 5, because the overhead image PQ is displayed with an orientation that is in accordance with the map image PG of the first display format DF1, the direction of travel D1 of the vehicle 1 in the map image PG will match the direction of travel D1 of the vehicle 1 in the overhead image PQ. The result is that the driver will be able to identify easily the state of the surroundings of the vehicle 1 through viewing the overhead image PQ.

The map image PG of the second display format DF2, the three-dimensional image PP that is displayed with an orientation that is in accordance with the map image PG of the second display format DF2, and the overhead image PQ that is displayed with an orientation that is in accordance with the map image PG of the second display format DF2 will be explained next in reference to FIG. 6 through FIG. 8. Directions are described in each of FIG. 6 through FIG. 8. The direction of North is the upward direction of the display 61, and the direction of East is the direction to the right in the display 61.

The map image PG of the second display format DF2 will be explained first in reference to FIG. 6. FIG. 6 is a screenshot showing an example of a map display screen 900 that displays a map image PG of the second display format DF2. The second display format DF2 is a display format DF that displays the map image PG on the display 61 so that the upward direction DU of the display 61 will be the direction of travel D1 of the vehicle 1 in the map image PG. An expressway RW, a fee station FS, and a vehicle mark MV are displayed on the map display screen 900. In the map display screen 900, the expressway RW shows an image of an expressway, and the fee station FS shows an image of a fee station. In the map display screen 900, the fee station FS is displayed by a rectangular mark.

The expressway RW is a one-way road from the southwest to the northeast. The expressway RW is structured with four lanes: a first lane RW1, a second lane RW2, a third lane RW3, and a fourth lane RW4. The first lane RW1, the second lane RW2, the third lane RW3, and the fourth lane RW4 are laid out, in that sequence, from the northwest to the southeast.

A vehicle mark MV indicates the location of the vehicle 1. The vehicle mark MV is displayed as, for example, an isosceles triangle, where the corner with the acute angle indicates the front end of the vehicle 1. The direction of travel D1 indicates the direction in which the vehicle 1 is traveling. The direction of travel D1 is in the northeast direction. That is, the vehicle 1 is traveling facing toward the northeast direction. The vehicle mark MV is displayed in the third lane RW3. That is, the vehicle 1 is traveling in the third lane RW3.

The fee station FS extends in the width direction of the expressway RW (from the northwest to the southeast). The fee station FS is arranged in the direction of travel of the vehicle 1. The distance LD is the distance from the vehicle 1 to the fee station FS.

In the second display format DF2, depicted in FIG. 6, the map image PG is displayed so that the upward direction DU in the display 61 will be parallel to the direction of travel D1 of the vehicle 1.

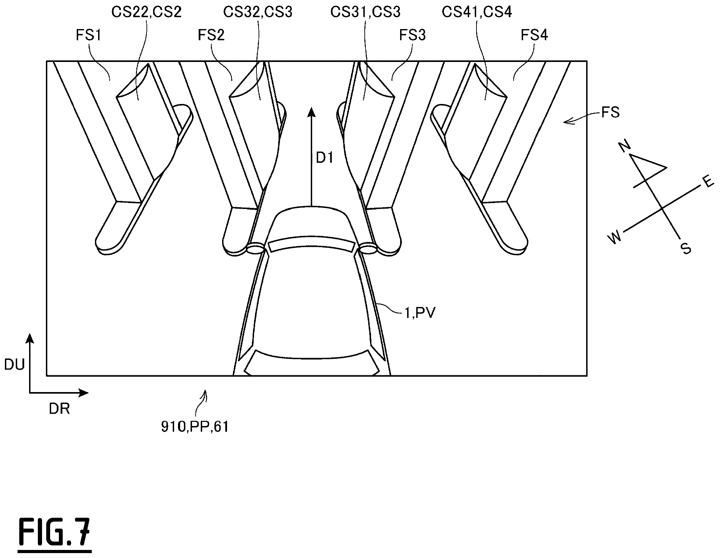

The three-dimensional image PP that is displayed with an orientation that is in accordance with the map image PG in the second display format DF2 will be explained next in reference to FIG. 7. FIG. 7 is a screenshot depicting an example of a surroundings display screen 910 that displays a three-dimensional image PP with an orientation that is in accordance with the map image PG of the second display format DF2. The surroundings display screen 910 is displayed by the surroundings image displaying portion 137 on the display 61. The vehicle image PV and the fee station FS are displayed on the surroundings display screen 910. Note that the vehicle image PV is generated, by the surroundings image displaying portion 137, from three-dimensional data for the vehicle 1 that is stored in the image storing portion 142. The three-dimensional image PP depicted in FIG. 7 is displayed with an orientation that is in accordance with the map image PG in the second display format DF2. For example, the direction of travel D1 of the vehicle 1 in the three-dimensional image PP matches the direction of travel D1 of the vehicle 1 in the map image PG. The direction of travel D1 is in the northeast direction. Additionally, the three-dimensional image PP depicted in FIG. 7 is an image that would be captured by a virtual camera VC if the virtual camera VC, depicted in FIG. 2, were located above and to the rear of the right side of the virtual vehicle VV.

A first fee facility FS1, a second fee facility FS2, a third fee facility FS3, and a fourth fee facility FS4 are arranged in the fee station FS. The first fee facility FS1, the second fee facility FS2, the third fee facility FS3, and the fourth fee facility FS4 are laid out, in that order, from the northwest to the southeast. The vehicle that is traveling in the third lane RW3 inserts the payment into the third cash slot CS3. The third cash slot CS3 is structured from a third cash slot CS31 and a third cash slot CS32.

As illustrated in FIG. 7, because the third cash slot CS31 and the third cash slot CS32 are arranged protruding toward the third lane RW3, when a vehicle 1 is traveling in the third lane RW3, the driver can appreciate the need for caution so as to not collide with the third cash slot CS31 or the third cash slot CS32.

Additionally, as illustrated in FIG. 7, because the three-dimensional image PP is displayed with an orientation that is in accordance with the map image PG of the first display format DF1, the direction of travel D1 of the vehicle 1 in the map image PG will match the direction of travel D1 of the vehicle 1 in the three-dimensional image PP. The result is that the driver will be able to identify easily the state of the surroundings of the vehicle 1 through viewing the three-dimensional image PP.

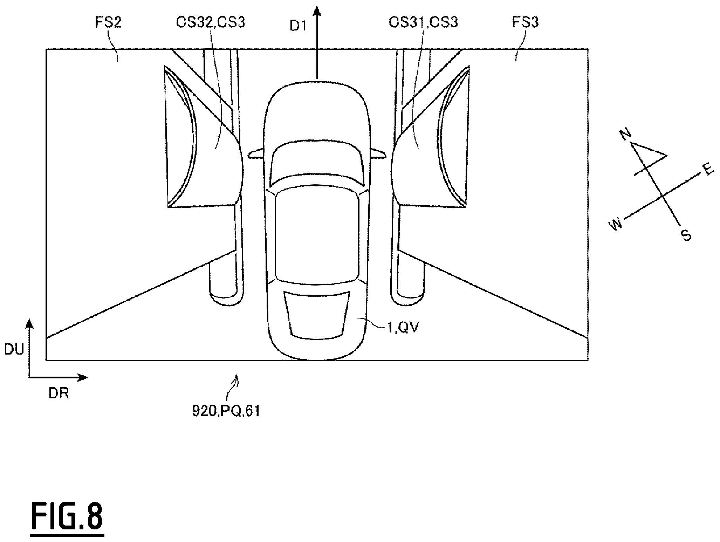

The overhead image PQ that is displayed with an orientation that is in accordance with the map image PG of the second display format DF2 will be explained next in reference to FIG. 8. FIG. 8 is a screenshot depicting an example of a surroundings display screen 920 that displays an overhead image PQ with an orientation that is in accordance with the map image PG of the second display format DF2. The surroundings display screen 920 is displayed by the surroundings image displaying portion 137 on the display 61. The vehicle image QV, the second fee facility FS2, and the third fee facility FS3 are displayed in the surroundings display screen 920. The overhead image PQ depicted in FIG. 8 is displayed with an orientation that is in accordance with the map image PG of the second display format DF2. For example, the direction of travel D1 of the vehicle 1 in the overhead image PQ matches the direction of travel D1 of the vehicle 1 in the map image PG. That is, the direction of travel D1 of the vehicle 1 in the overhead image PQ will be parallel to the upward direction DU in the display 61.

As illustrated in FIG. 8, the third cash slot CS32 is located on the third lane RW3 side of the second fee facility FS2. In addition, the third cash slot CS31 is located on the third lane RW3 side of the third fee facility FS3.

As illustrated in FIG. 8, because the third cash slot CS31 and the third cash slot CS32 are arranged protruding toward the third lane RW3, when a vehicle 1 is traveling in the third lane RW3, the driver can appreciate the need for caution so as to not collide with the third cash slot CS31 or the third cash slot CS32.

Additionally, as illustrated in FIG. 8, because the overhead image PQ is displayed with an orientation that is in accordance with the map image PG of the second display format DF2, the direction of travel D1 of the vehicle 1 in the map image PG will match the direction of travel D1 of the vehicle 1 in the overhead image PQ. The result is that the driver will be able to identify easily the state of the surroundings of the vehicle 1 through viewing the overhead image PQ.

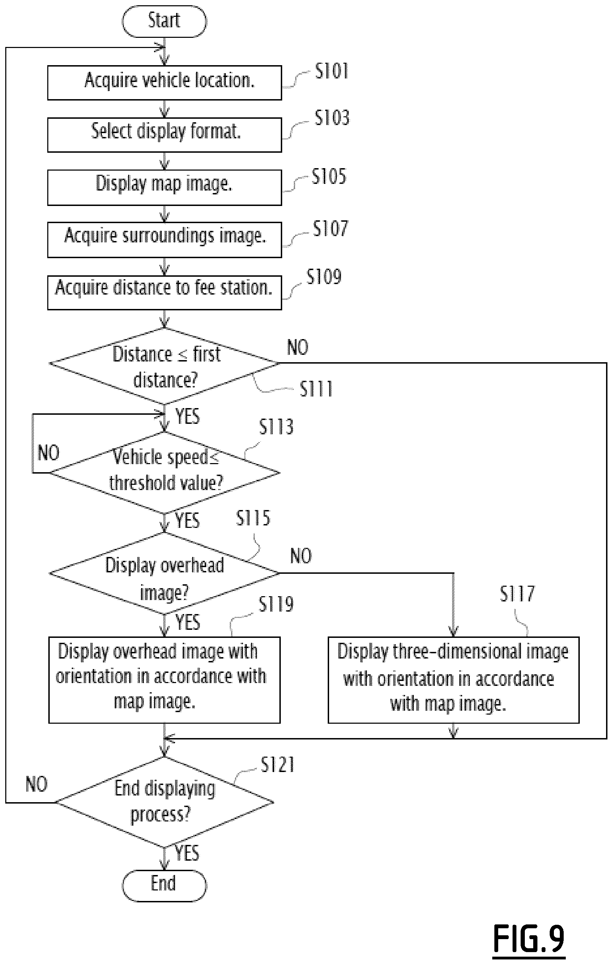

The processing by the vehicle surroundings image displaying device 100 will be explained next in reference to FIG. 9. FIG. 9 is a flowchart showing an example of the processes of the vehicle surroundings image displaying device 100. Note that in FIG. 8 the explanation is for a case wherein the image selecting portion 136 has already selected the overhead image PQ or three-dimensional image PP through, for example, an operation by the user on the operating portion 50. First, in Step S101, the location detecting portion 131 detects the location of the vehicle 1 through acquiring, from the location detecting unit 10, location information that indicates the location of the vehicle 1. Next, in Step S103, the format selecting portion 132 receives a user operation on the operating portion 50, to select one display format from a plurality of display formats DF in response to the operation that is received. Note that the plurality of display formats DF includes the first display format DF1 and the second display format DF2.

Next, in Step S105, the map image displaying portion 133 displays the map image PG on the display 61 in the one display format DFA that was selected in Step S103. The map image displaying portion 133 displays, on the display 61 in, for example, the first display format DF1 or the second display format DF2, the map image PG that was acquired from the map storing portion 141. Next, in Step S107, the image acquiring portion 134 acquires an image of the surroundings of the vehicle 1. The image acquiring portion 134 acquires the image of the surroundings of the vehicle 1 through, for example, acquiring the captured images PC captured by the front camera 31, the rear camera 33, the left side camera 35, and the right-side camera 37 of the imaging portion 30.

Next, in Step S 109, the evaluating portion 135 detects the distance LD from the vehicle 1 to the fee station FS. The evaluating portion 135 acquires, for example, the distance LD from the distance sensor 40. Next, in Step S111, the evaluating portion 135 evaluates whether the distance LD is no greater than a first distance L1. The first distance L1 is, for example, 5 m. If the evaluating portion 135 evaluates that the distance LD is greater than the first distance L1 (Step S109: NO), processing advances to Step S121. If the evaluating portion 135 evaluates that the distance LD is no greater than the first distance L1 (Step S109: YES), processing advances to Step S113.

Given this, in Step S113, the evaluating portion 135 evaluates whether or not the travel speed of the vehicle 1 is no greater than a threshold value. The threshold value is, for example, 10 km/h. If the evaluating portion 135 evaluates that the travel speed of the vehicle 1 is greater than the threshold value (Step S113: NO), processing goes into the standby state. If the evaluating portion 135 evaluates that the travel speed of the vehicle 1 is no greater than the threshold value (Step S113: YES), processing advances to Step S115. Given this, in Step S115 the evaluating portion 135 evaluates whether or not to display the overhead image PQ.

If the evaluating portion 135 evaluates that the overhead image PQ is not to be displayed (Step S115: NO), processing advances to Step S117. Given this, in Step S117, the surroundings image displaying portion 137 displays, on the display 61, an image of the surroundings of the vehicle 1, as a three-dimensional image PP with an orientation that is in accordance with the map image PG of the one display format DFA selected in Step S103. Processing advances to Step S121 thereafter. If the evaluating portion 135 evaluates that the overhead image PQ is to be displayed (Step S115: YES), processing advances to Step S119. Given this, in Step S119, the surroundings image displaying portion 137 displays, on the display 61, an image of the surroundings of the vehicle 1, as overhead image PQ, with an orientation that is in accordance with the map image PG in the one display format selected in Step S103. Processing then advances to Step S121.

Next, in Step S121, the vehicle surroundings image displaying device 100 evaluates whether or not to terminate the image displaying process in response to a user operation received by the operating portion 50. If the vehicle surroundings image displaying device 100 evaluates that the image displaying process is not to be terminated (Step S121: NO), processing returns to Step S101. If the vehicle surroundings image displaying device 100 evaluates that the image displaying process is to be terminated (Step S121: YES), processing thereafter is terminated.

Step S101 corresponds to an example of a "location detecting step." Step S103 corresponds to an example of a "format selecting step." Step S105 corresponds to an example of a "map image displaying step." Step S107 corresponds to an example of an "image acquiring step." Step S111 corresponds to an example of an "evaluating step." Step S117 and Step S119 correspond to an example of a "surroundings image displaying step."

As explained in reference to FIG. 9, when the travel speed of the vehicle 1 is no greater than a threshold value, the image of the surroundings of the vehicle 1 is switched from the map image PG to displaying the three-dimensional image PP or the overhead image PQ. Consequently, the image of the surroundings of the vehicle 1 can be switched suitably from the map image PG to the three-dimensional image PP or the overhead image PQ through setting the threshold value appropriately.

As explained above in reference to FIG. 1 through FIG. 9, the vehicle surroundings image displaying device 100 according to the present embodiment comprises: a location detecting portion 131 for detecting the location of the vehicle 1; a format selecting portion 132 for selecting one display format DFA from a plurality of display formats DF as the display format DF for the map image PG of the surrounding of the location of the vehicle 1; a map image displaying portion 133 for displaying, on the display 61, the map image PG in one display format DFA; an image acquiring portion 134 for acquiring an image of the surroundings of the vehicle 1; an evaluating portion 135 for evaluating whether or not a distance LD from the vehicle 1 to the fee station FS is no greater than a first distance L1; and a surroundings image displaying portion 137 for displaying, on the display 61, an image of the surroundings of the vehicle 1, with an orientation that is in accordance with the map image PG of the one display format DFA, upon evaluation by the evaluating portion 135 that the distance LD is no greater than the first distance L1.

Consequently, upon evaluation, by the evaluating portion 135, that the distance LD is no greater than the first distance L1, the surroundings image displaying portion 137 displays the image of the surroundings of the vehicle 1 on the display 61 with an orientation that is in accordance with the map image PG of the one display format DFA. Consequently, the image of the surroundings of the vehicle 1 will be displayed with an orientation that is in accordance with that of the map image PG, enabling the driver to identify easily the state of the surroundings of the vehicle 1. Moreover, if the distance LD is no greater than the first distance L1, the image of the surroundings of the vehicle 1 will be displayed, enabling the image of the surroundings of the vehicle 1 to be displayed with an appropriate timing through setting the first distance L1 appropriately.

Additionally, the surroundings image displaying portion 137 displays the image of the surroundings of the vehicle 1 on the display 61 as an overhead image PQ. Consequently, the image of the surroundings of the vehicle 1 is displayed as an overhead image PQ, enabling the driver to identify the state of the surroundings of the vehicle 1 easily.

Additionally, the surroundings image displaying portion 137 displays the image of the surroundings of the vehicle 1 on the display 61 as a three-dimensional image PP wherein a virtual viewpoint is set outside of the vehicle 1. Consequently, the image of the surroundings of the vehicle 1 is displayed as a three-dimensional image PP, enabling the driver to identify the state of the surroundings of the vehicle 1 easily.

Moreover, an image selecting portion 136 for selecting the overhead image PQ or the three-dimensional image PP depending on the positional relationship between the vehicle 1 and the fee station FS is provided, and the surroundings image displaying portion 137 displays, on the display 61, the image selected by the image selecting portion 136.

Through this, the overhead image PQ or the three-dimensional image PP is selected in accordance with the positional relationship between the vehicle 1 and the fee station FS, and the selected image is displayed, enabling the overhead image PQ or the three-dimensional image PP to be selected and displayed as appropriate. The result is that the driver will be able to identify the state of the surroundings of the vehicle 1 easily.

Moreover, the plurality of display formats DF includes a first display format DF1 wherein the map image PG is displayed on the display 61 so that the upward direction DU of the display 61 will be the direction of North of the map image PG, and a second display format DF2 wherein the map image PG is displayed on the display 61 so that the upward direction DU of the display 61 will be the direction of travel D1 of the vehicle 1 on the map image PG. Consequently, the map image PG can be displayed on the display 61 so that the upward direction DU of the display 61 will be the direction of North in the map image PG, through the driver selecting the first display format DF1. Additionally, the map image PG can be displayed on the display 61 so that the upward direction DU of the display 61 will be the direction of travel D1 of the vehicle 1 on the map image PG by the driver selecting the second display format DF2. This can improve the convenience for the driver.

Moreover, the vehicle surroundings image displaying method according to the present embodiment includes: a location detecting step for detecting the location of the vehicle 1; a format selecting step for selecting one display format DFA from a plurality of display formats DF as the display format DF for the map image PG of the surrounding of the location of the vehicle 1; a map image displaying step for displaying, on the display 61, the map image PG in one display format DFA; an image acquiring step for acquiring an image of the surroundings of the vehicle 1; an evaluating step for evaluating whether or not a distance LD from the vehicle 1 to the fee station FS is no greater than a first distance L1; and a surroundings image displaying step for displaying, on the display 61, an image of the surroundings of the vehicle 1, with an orientation that is in accordance with the map image PG of the one display format DFA, upon evaluation in the evaluating step that the distance LD is no greater than the first distance L1. As a result, the vehicle surroundings image displaying method according to the present embodiment has the same effects as those of the vehicle surroundings image displaying device 100 according to the present embodiment.

The present embodiment, described above, is no more than an illustrative example of one embodiment according to the present invention, and arbitrary modifications and applications are possible in a range that does not deviate from the spirit or intent of the present invention.

For example, for ease in understanding the present invention, FIG. 1 is a diagram wherein the structural elements are shown partitioned into the main processing details, and the structural elements may be partitioned into more structural elements depending on the processing details. Moreover, the partitioning may be such that more processes are carried out by a single structural element. Moreover, the processes in any of the structural elements may be executed in a single hardware or executed by a plurality of hardwares. Moreover, the processes of each structural element may be achieved by a single program, or by a plurality of programs.

Moreover, in FIG. 1 the vehicle surroundings image displaying device 100 may be provided integrated with the displaying portion 50.

Moreover, while, in the present embodiment, the vehicle surroundings image displaying device 100 is provided with a location detecting portion 131, a format selecting portion 132, a map image displaying portion 133, an image acquiring portion 134, an evaluating portion 135, an image selecting portion 136, and a surroundings image displaying portion 137, there is no limitation thereto. A server device that connects communicatively to the vehicle surroundings image displaying device 100 through a network such as the Internet may provide the location detecting portion 131, the format selecting portion 132, the map image displaying portion 133, the image acquiring portion 134, the evaluating portion 135, the image selecting portion 136, and/or the surroundings image displaying portion 137. The server device may, for example, be provided with the surroundings image displaying portion 137. In this case, the surroundings image displaying portion 137 may acquire an overhead image PQ imaged by an artificial satellite.

Moreover, when the vehicle surroundings information displaying method according to the present invention is achieved using a computer, the control program PGM that is executed by the computer may be structured in the form of a recording medium or a transmission medium for transmitting the control program PGM. The recording medium may use a magnetic or optical recording medium, or a semiconductor memory device. Specifically, it may be a fixed recording medium or a portable recording medium such as a flexible disk, an HDD, a CD-ROM (Compact Disk Read-Only Memory), a DVD, a Blu-ray^{®} disc, a magnetooptical disc, a flash memory, a card-type recording medium, or the like. Moreover, the recording medium may be a RAM, a ROM, or a non-volatile storage system, such as an HDD, provided by the vehicle surroundings image displaying device 100. Additionally, the vehicle surroundings image displaying device 100 may download the control program PGM from a server device that is connected communicatively through a network to the vehicle surroundings image displaying device 100.

Moreover, the processing units in the flowchart shown in FIG. 9 are partitioned depending on the main processing details thereof to facilitate easy understanding of the processes of the vehicle surroundings image displaying device 100, for example, but the present invention is not limited by the names and ways in which the processing units are divided. The processes of the vehicle surroundings image displaying device 100 may be divided into more processing units depending on the process details. Moreover, the processes of the vehicle surroundings image displaying device 100 may instead be divided so as to include more processes in a single processing unit.

### [Explanations of Reference Symbols]

100: Vehicle Surroundings Image Displaying Device
1: Vehicle
10: Location Detecting Unit
20: Detecting Portion
30: Imaging Portion
40: Distance Sensor
60: Displaying Portion
61: Display
130: Processor
140: Memory

## Claims

1. A vehicle surroundings image displaying device comprising:
a location detecting portion for detecting a vehicle location;
a format selecting portion for selecting one display format from a plurality of display formats as the display format for a map image of the surrounding of the location of the vehicle;
a map image displaying portion for displaying the map image on a display with the one display format;
an image acquiring portion for acquiring an image of the surroundings of the vehicle;
an evaluating portion for evaluating whether a distance from the vehicle to a prescribed facility is no greater than a first distance; and
a surroundings image displaying portion for displaying, on the display, an image of the surroundings of the vehicle, with an orientation that is in accordance with the map image of the one display format, upon evaluation, by the evaluating portion, that the distance is no greater than the first distance.

2. A vehicle surroundings image displaying device according to claim 1, wherein:
the surroundings image displaying portion displays, on the display, the image of the surroundings of the vehicle as an overhead image.

3. A vehicle surroundings image displaying device according to claim 2, wherein:
the surroundings image displaying portion displays, on the display, the image of the surroundings of the vehicle as a three-dimensional image wherein a virtual viewpoint has been set outside of the vehicle.

4. A vehicle surroundings image displaying device according to claim 3, comprising:
an image selecting portion for selecting the overhead image or the three-dimensional image, depending on a positional relationship of the vehicle with the prescribed facility, wherein:
the surroundings image displaying portion displays, on the display, an image selected by the image selecting portion.

5. A vehicle surroundings image displaying device according to any one of claims 1 to 4, wherein:
the plurality of display formats includes:
a first display format for displaying the map image on the display so that the upward direction of the display will be the direction of North in the map image; and
a second display format for displaying the map image on the display so that the upward direction of the display will be the direction of travel of the vehicle in the map image.

6. A vehicle surroundings displaying method, including:
a location detecting step for detecting a vehicle location;
a format selecting step for selecting one display format from a plurality of display formats as the display format for a map image of the surrounding of the location of the vehicle;
a map image displaying step for displaying the map image on a display with the one display format;
an image acquiring step for acquiring an image of the surroundings of the vehicle;
an evaluating step for evaluating whether or not a distance from the vehicle to a prescribed facility is no greater than a first distance; and
a surroundings image displaying step for displaying, on the display, an image of the surroundings of the vehicle, with an orientation that is in accordance with the map image of the one display format, upon evaluation, in the evaluating step, that the distance is no greater than the first distance.
